# EUROPEAN PATENT APPLICATION

(11) **EP 2 533 211 A2**
(43) Date of publication of application: **12.12.2012**
(21) Application number: 12170414.2
(22) Date of filing: 01.06.2012
(51) Int. Cl.: G06T 11/20

(54) **Information processing apparatus, program, and information processing method**

(30) Priority: 10.06.2011 JP 2011129855
(71) Applicant: Sony Corporation, Tokyo 108-0075 (JP)
(72) Inventor: Homma, Fuminori, Minato-ku, Tokyo 108-0075 (JP); Miyashita, Ken, Minato-ku, Tokyo 108-0075 (JP); Moriya, Shoichiro, Minato-ku, Tokyo 108-0075 (JP); Nashida, Tatsushi, Minato-ku, Tokyo 108-0075 (JP)
(74) Representative: Robinson, Nigel Alexander Julian

(57) **Abstract**

Provided is an information processing apparatus including a graphic acquisition unit for acquiring graphic data, an operation acquisition unit for acquiring an operation of a user, a determination unit for determining the operation acquired by the operation acquisition unit, and a processing unit for performing a process on the graphic data based on a determination by the determination unit.

## Description

The present disclosure relates to an information processing apparatus, a program, and an information processing method.

In recent years, various technologies are disclosed as technologies for easily creating graphic data. For example, a technology is disclosed that is used to easily draw a line segment, which is an example of graphic data (for example, see JP 2002-63586A), According to such a technology, a line segment, which is specific graphic data, can be drawn with ease.

However, although when restricted to creation of specific graphic data, easy creation of graphic data is enabled, but in the case of performing various processes regarding graphic data, an operation of selecting a process regarding graphic data becomes necessary. A process regarding graphic data includes a process of selecting a line segment, a process of drawing a line segment, and the like, for example. Accordingly, operations by a user become complicated. Particularly, when using creation of graphic data in a lecture or a presentation with which real-timeness is important, a user's convenience is increased if an operation is easily performed.

Accordingly, it is desirable that a method is provided that enables to perform a process regarding graphic data according to an operation of a user by automatically identifying the operation.

According to the present disclosure, there is provided an information processing apparatus which includes a graphic acquisition unit for acquiring graphic data, an operation acquisition unit for acquiring an operation of a user, a determination unit for determining the operation acquired by the operation acquisition unit, and a processing unit for performing a process on the graphic data based on a determination by the determination unit.

Furthermore, according to the present disclosure, there is provided a program for causing a computer to function as an information processing apparatus including a graphic acquisition unit for acquiring graphic data, an operation acquisition unit for acquiring an operation of a user, a determination unit for determining the operation acquired by the operation acquisition unit, and a processing unit for performing a process on the graphic data based on a determination by the determination unit.

Furthermore, according to the present disclosure, there is provided an information processing method which includes acquiring graphic data, acquiring an operation of a user, determining the operation acquired, and performing a process on the graphic data based on a determination.

As described above, according to the present disclosure, it is possible to perform a process regarding graphic data according to an operation of a user by automatically identifying the operation.

Further particular and preferred aspects of the present invention are set out in the accompanying independent and dependent claims. Features of the dependent claims may be combined with features of the independent claims as appropriate, and in combinations other than those explicitly set out in the claims.

Embodiments of the invention will now be described, by way of example only, with reference to the accompanying drawings in which:
FIG. 1 is a diagram for giving an overview of an information processing apparatus according to an embodiment of the present disclosure;
FIG. 2 is a diagram showing a hardware configuration of the information processing apparatus;
FIG. 3 is a diagram showing a functional configuration of the information processing apparatus;
FIG. 4 is a diagram for describing an example of a function of the information processing apparatus (graphic data creation);
FIG. 5 is a diagram for describing an example of a function of the information processing apparatus (a case where there is a vertex as a part of an existing graphic);
FIG. 6 is a diagram for describing an example of a function of the information processing apparatus (a case where there is an intersection point as a part of an existing graphic);
FIG. 7 is a diagram for describing an example of a function of the information processing apparatus (a case of connecting two graphic elements);
FIG. 8 is a diagram for describing an example of a function of the information processing apparatus (a case of combining two graphic elements);
FIG. 9 is a diagram for describing an example of a function of the information processing apparatus (a case of connecting two graphic elements);
FIG. 10 is a diagram for describing an example of a function of the information processing apparatus (a case where two graphic elements intersect);
FIG. 11 is a diagram for describing an example of a function of the information processing apparatus (a case of making two graphic elements parallel to each other);
FIG 12 is a diagram for describing an example of a function of the information processing apparatus (a case of making two graphic elements have equal lengths and a case of selecting either of two overlapping graphic elements);
FIG. 13 is a diagram for describing an example of a function of the information processing apparatus (a case of making a relationship between two line segments a right angle);
FIG. 14 is a diagram for describing an example of a function of the information processing apparatus (a case of making two graphic elements have equal angles and a case of selecting either of two overlapping graphic elements);
FIG. 15 is a diagram for describing an example of a function of the information processing apparatus (a case of making an object contact a graphic element);
FIG. 16 is a diagram for describing an example of a function of the information processing apparatus (a case of making an object contact a graphic element);
FIG. 17 is a flow chart showing an example of an operation of the information processing apparatus;
FIG. 18 is a diagram for describing a basic operation of the information processing apparatus (creation and selection of a line segment group);
FIG. 19 is a diagram for describing a basic operation of the information processing apparatus (creation and selection of a circle);
FIG. 20 is a diagram for describing a basic operation of the information processing apparatus (restriction on a graphic element);
FIG. 21 is a diagram for describing a basic operation of the information processing apparatus (restriction on a graphic element); and
FIG. 22 is a diagram for describing a basic operation of the information processing apparatus (restriction on a graphic element).

Hereinafter, preferred embodiments of the present disclosure will be described in detail with reference to the appended drawings. Note that, in this specification and the appended drawings, structural elements that have substantially the same function and configuration are denoted with the same reference numerals, and repeated explanation of these structural elements is omitted.

Also, the explanation will be given in the following order.
1. Embodiment
   1-1: Overview of Information Processing Apparatus
   1-2: Example Configuration of Information Processing Apparatus
   1-3: Flow of Operation of Information Processing Apparatus
   1-4: Basic Operation of Information Processing Apparatus
2. Summary

### <1. Embodiment>

### [1-1: Overview of Information Processing Apparatus]

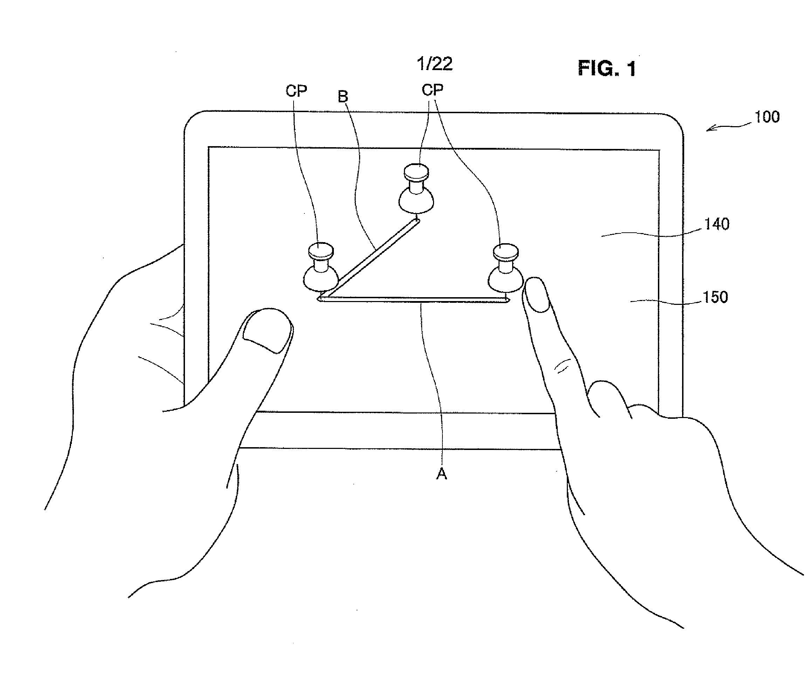

First, an information processing apparatus according to an embodiment of the present disclosure will be described. FIG. 1 is a diagram for giving an overview of the information processing apparatus according to an embodiment of the present disclosure. As shown in FIG. 1, an information processing apparatus 100 according to an embodiment of the present disclosure can display a line segment on a display device 140. A line segment A and a line segment B are shown in FIG. 1 as examples of the line segment to be displayed on the display device 140, but the number of line segments to be displayed on the display device 140 is not particularly limited. Also, a graphic other than the line segment (for example, a circle or the like) may also be displayed.

Also, in the case of receiving input of a movement operation by an input device 150, the information processing apparatus 100 can move a line segment according to the movement operation. For example, as shown in FIG. 1, in a case control points CP for moving a line segment is displayed at both ends of a line segment, an operation of moving these control points CP may be input as the movement operation. Also, a line segment having control points CP at its ends can be moved based on such a movement operation that is input.

In the embodiment of the present disclosure, a case is assumed where a touch panel is used as the input device 150. In this case, the movement operation is performed by a user dragging a movement target from a movement source to a movement destination with an operating tool (a finger, a touch pen, or the like). However, the input device 150 is not limited to a touch panel. For example, a mouse, a keyboard, an input interface based on gesture recognition, or the like may also be used as the input device 150.

The information processing apparatus 100 according to the embodiment of the present disclosure may be any type of device such as a smartphone, a PC (Personal Computer), or the like, for example. Also, the information processing apparatus 100 according to the embodiment of the present disclosure may be an information processing module that is installed in the device described above.

### [1-2: Example Configuration of Information Processing Apparatus]

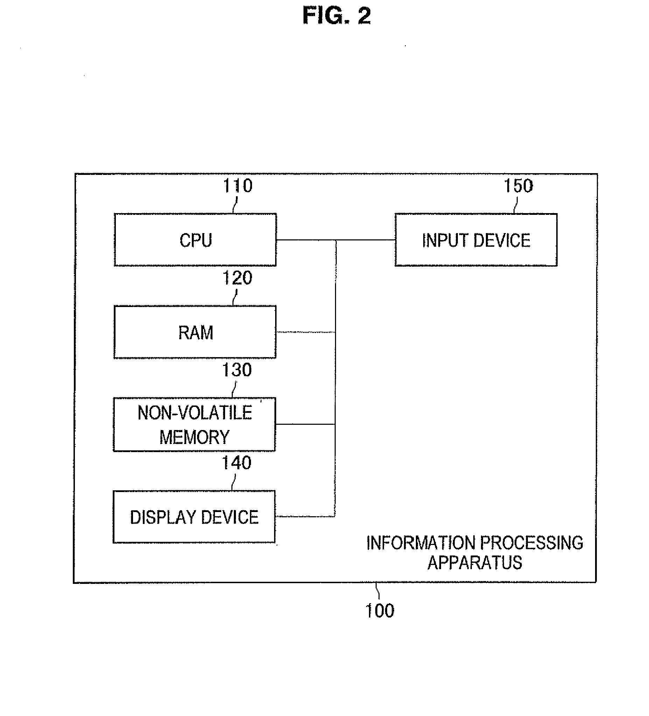

Next, an example configuration of the information processing apparatus 100 will be described. FIG. 2 is a diagram showing a hardware configuration of the information processing apparatus 100. As shown in FIG. 2, the information processing apparatus 100 includes a CPU 110, a RAM 120, a non-volatile memory 130, a display device 140, and an input device 150, for example.

The non-volatile memory 130 is a device for data storage configured as an example of a storage unit of the information processing apparatus 100, and is configured from a magnetic storage unit, such as an HDD (Hard Disk Drive) or the like, a semiconductor storage device, an optical storage device, a magneto-optical storage device, or the like, for example. The non-volatile memory 130 stores programs to be executed by the CPU 110 and various types of data used in the execution thereof.

The RAM 120 stores programs to be executed by the CPU 110, parameters used in the execution thereof, and the like.

The CPU 110 functions as an arithmetic processing unit and a control unit, and controls entire operation of a part of the operation of the information processing apparatus 100 according to the various programs recorded in the non-volatile memory 130 and the RAM 120. The CPU 110 is configured as an example of a control unit of the information processing apparatus 100.

The display device 140 is configured from a device that is capable of visually notifying a user of information, such as an LCD (Liquid Crystal Display), an organic electroluminescence (EL) display device, or the like, for example. The display device 140 outputs results obtained by various processes performed by the information processing apparatus 100, for example. Specifically, the display device 140 displays, in texts or images, the results obtained by various processes performed by the information processing apparatus 100.

The input device 150 outputs, to the CPU 110, an operation acquired from a user as a signal. A user of the information processing apparatus 100 can input various types of data to the information processing apparatus 100 or instruct the information processing apparatus 100 to perform a processing operation, by operating the input device 150. The input device 150 is configured from a touch panel, for example, but the type of the input device 150 is not particularly limited. For example, the input device 150 may be configured from a device such as a mouse, a keyboard, an input interface based on gesture recognition, or the like.

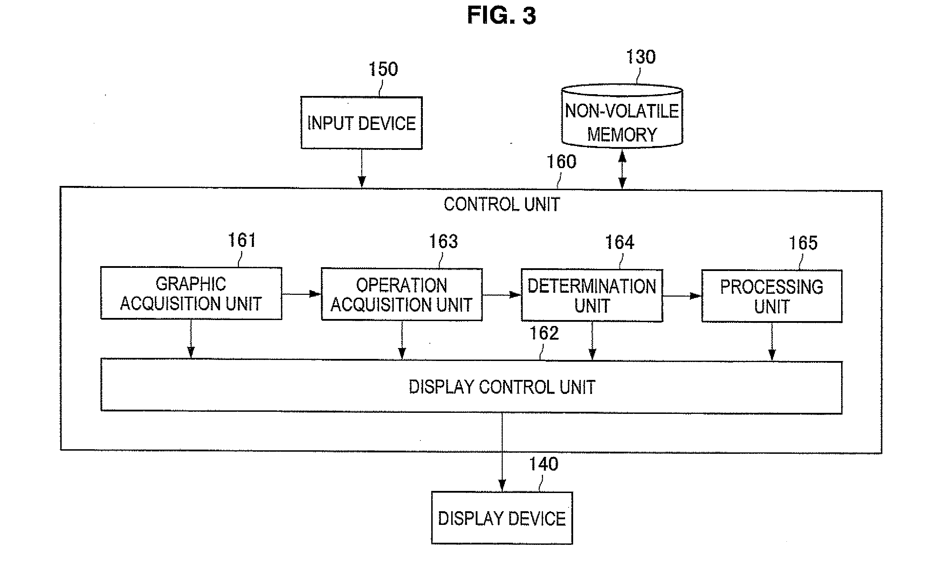

FIG. 3 is a diagram showing a functional configuration of the information processing apparatus 100. As shown in FIG. 3, the information processing apparatus 100 includes a control unit 160, and the control unit 160 is provided with a graphic acquisition unit 161, a display control unit 162, an operation acquisition unit 163, a determination unit 164, and a processing unit 165. As shown in FIG. 3, the non-volatile memory 130, the input device 150, and the display device 140 may be provided in the information processing apparatus 100, or may be provided outside the information processing apparatus 100.

The graphic acquisition unit 161 acquires graphic data. The graphic data is typically formed from one or more line segments, but may also be formed from a curved line, in addition to the line segment. Or, it may be formed from a curved line instead of the line segment. The curved line may be a circle, an oval, or a part thereof, for example. The graphic data may be embedded in a program to be executed by the CPU 110, or may be recorded in the non-volatile memory 130.

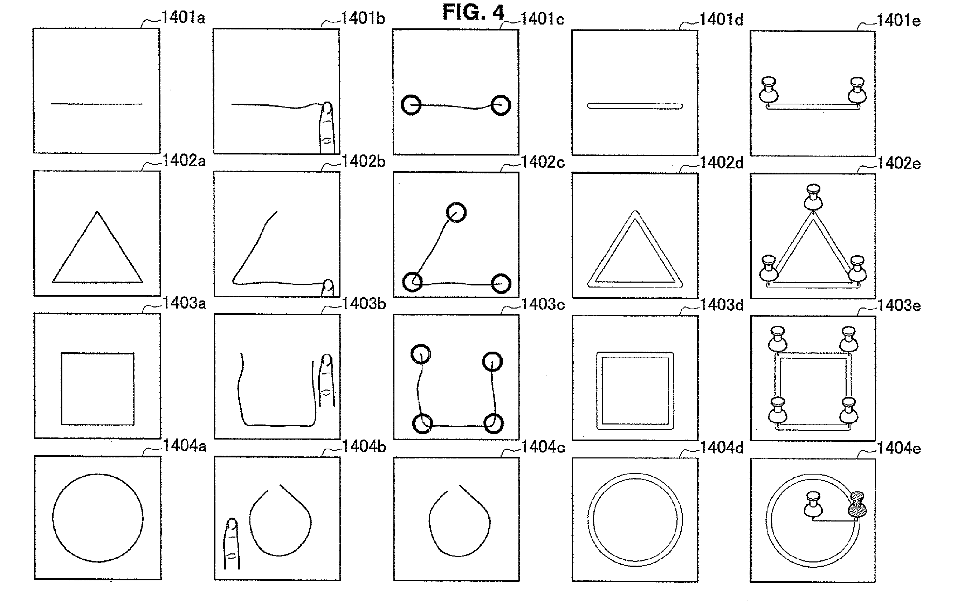

The information processing apparatus 100 can provide various functions based on the graphic data acquired by the graphic acquisition unit 161. Examples of the function of the information processing apparatus 100 will be described in the following. FIGS. 4 to 16 are diagrams for describing examples of the function of the information processing apparatus 100.

FIG. 4 shows an example of the function of the information processing apparatus 100 (graphic data creation). As shown in FIG. 4, the processing unit 165 can create graphic data based on an operation of a user. Graphic data that a user intends to cause the information processing apparatus 100 to create is shown on each of screens 1401a to 1404a, for example. The graphic data created by the processing unit 165 is controlled by the display control unit 162 so as to be displayed by the display device 140.

First, a user performs an operation (for example, an operation of tracing) on the input device 150. An operation performed by the user is performed as shown on each of the screens 1401b to 1404b, for example. The processing unit 165 creates graphic data based on the operation of the user, for example. At this time, the processing unit 165 detects points regarding which an average value of a slope of the operation is outside a predetermined range (points shown on each of screens 1401c to 1403e), and creates a polygon having the detected points as the vertices.

The display control unit 162 performs control so as to display the graphic data created by the processing unit 165. The display control unit 162 performs control so as to display the graphic data as shown on each of screens 1401 d to 1404d, for example. The timing of display is when the operation of the user is completed, for example (for example, when an operation on the input device is finished). As described, if all the vertices of a polygon are decided, the processing unit 165 can create graphic data even if not all the line segments have been input, by filling in for line segments that are not input.

The display control unit 162 may perform control so as to display graphic data as shown on each of screens 1401e to 1404e, for example. That is, the display control unit 162 detects control points based on the graphic data, and may perform control such that some kind of marks are displayed at the control points detected (pins in the example shown by the screens 1401e to 1404e). The control point may be an end point of a line segment as shown on each of the screens 1401e to 1403e, or may be a point at the centre of a circle or a point on the circumference of the circle as shown on the screen 1404e.

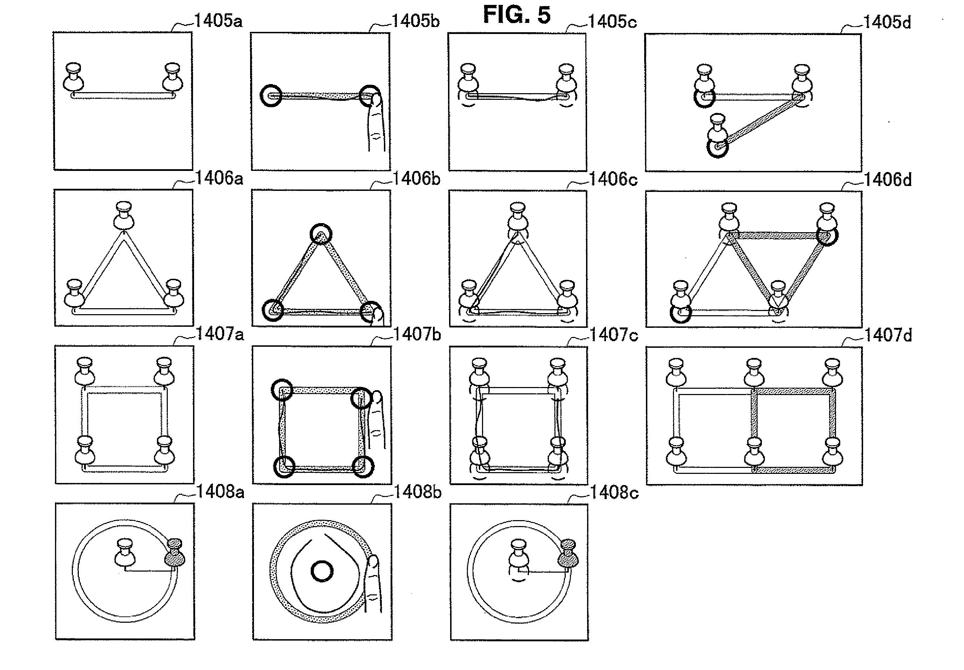

FIG. 5 shows an example of the function of the information processing apparatus 100 (a case where there is a vertex as a part of an existing graphic). As shown in FIG. 5, the processing unit 165 can create graphic data based on an operation of a user. Graphic data that a user intends to cause the information processing apparatus 100 to create is shown on each of screens 1405a to 1408a, for example. The graphic data created by the processing unit 165 is controlled by the display control unit 162 so as to be displayed by the display device 140.

First, a user performs an operation (for example, an operation of tracing) on the input device 150. An operation performed by the user is performed as shown on each of the screens 1405b to 1408b, for example. The processing unit 165 creates graphic data based on the operation of the user, for example. At this time, the processing unit 165 detects points regarding which an average value of a slope of the operation is outside a predetermined range (points shown on each of screens 1405b to 1407b), and creates a polygon having the detected points as the vertices.

The display control unit 162 performs control so as to display the graphic data created by the processing unit 1b5. The display control unit 162 performs control so as to display the graphic data as shown on each of the screens 1405b to 1408b, for example. The timing of display is when the operation of the user is completed, for example (for example, when an operation on the input device is finished). As described, if all the vertices of a polygon are decided, the processing unit 165 can create graphic data even if not all the line segments have been input, by filling in for line segments that are not input.

Here, the user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation of the user is performed as shown on each of screens 1405e to 1408c. At this time, the determination unit 164 determines that the operation acquired by the operation acquisition unit 163 is an operation of selecting all of one or more end points included in the graphic data. For example, in the example shown on the screen 1405c, all of the two end points are selected, and in the example shown on the screen 14fl6o, all of the three end points are selected, and in the example shown on the screen 1407c, all of the four end points are selected. In such a case, the processing unit 165 selects the graphic data, for example.

Furthermore, an operation of the user is performed as shown on each of screens 1405d to 1407d, for example. At this time, the determination unit 164 determines that the operation acquired by the operation acquisition unit 163 is an operation of selecting a part of one or more end points included in the graphic data. For example, in the example shown on the screen 1405d, one of the two end points is selected, and in the example shown on the screen 1406d, two of the three end points are selected, and in the example shown on the screen 1407d, two of the four end points are selected. In such a case, the processing unit 165 newly creates graphic data, for example.

The newly created graphic is controlled by the display control unit 152 so as to be displayed as shown on each of the screens 14fl5d to 1407d, for example.

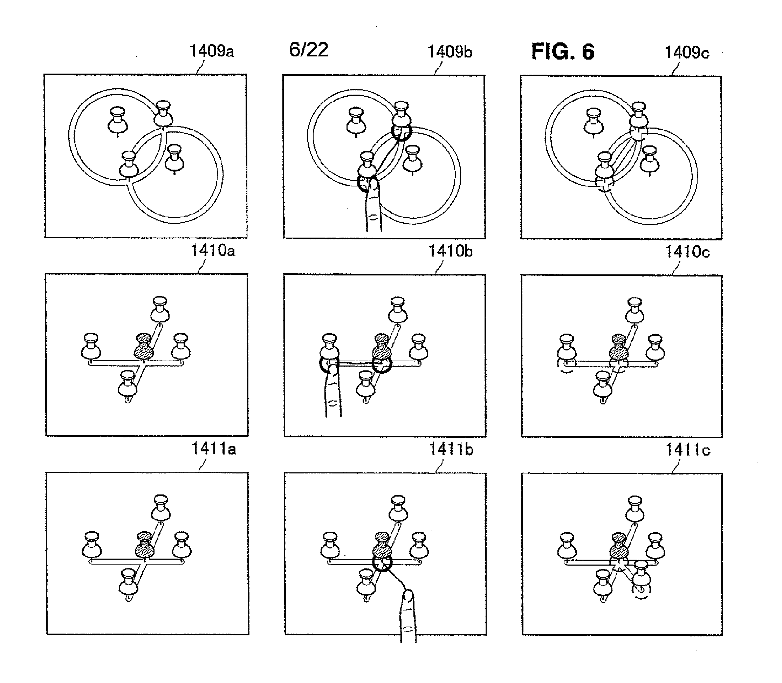

FIG. 6 shows an example of the function of the information processing apparatus 100 (a case where there is an intersection point as a part of an existing graphic). As shown in FIG 6, the processing unit 165 can create graphic data based on an operation of the user. Graphic data created by the processing unit 165 is shown on each of screens 1409a to 1411a, for example. The graphic data created by the processing unit 165 is controlled by the display control unit 162 so as to be displayed by the display device 140.

Here, the user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation of the user is performed as shown on a screen 1409b. At this time, the determination unit 164 determines that the operation acquired by the operation acquisition unit 163 is an operation of selecting two intersection points included in the graphic data. For example, in the example shown on the screen 1409b, both of the two intersection points are selected. In such a case, the processing unit 165 creates, as the graphic data, a line segment joining the two intersection points.

Furthermore, an operation performed by the user is performed as shown on a screen 1410b, for example. At this time, the determination unit 164 determines that the operation acquired by the operation acquisition unit 163 is an operation of selecting one intersection point included in the graphic data and an end point included in the graphic data. For example, in the example shown on the screen 1410b, one intersection point included in the graphic data and an end point included in the graphic data are selected. In such a case, the processing unit 165 omits creation of new graphic data, for example.

Furthermore, an operation performed by the user is performed as shown on a screen 1411b, for example. At this time, the determination unit 164 determines that the operation acquired by the operation acquisition unit 163 is an operation of selecting one intersection point included in the graphic data and a point not included in the graphic data. For example, in the example shown on the screen 1411b, one intersection point included in the graphic data and a point not included in the graphic data are selected. In such a case, the processing unit 165 creates, as new graphic data, a line segment that joins the one intersection point selected and the point not included in the graphic data.

The newly created graphic data is controlled by the display control unit 162 so as to be displayed as shown on each of screens 1409c and 1411c, for example.

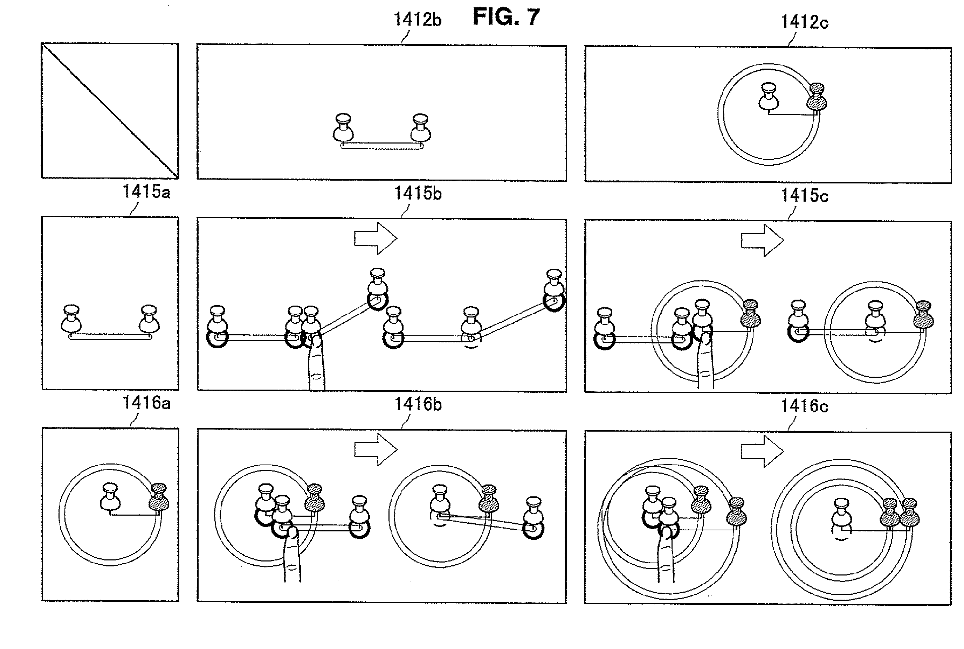

FIG. 7 shows an example of the function of the information processing apparatus 100 (a case of connecting two graphic elements). As described above, the processing unit 165 can create graphic data based on an operation of a user. Also, the processing unit 165 can move the graphic data created, based on an operation of the user. Here, graphic data which is to be moved is shown on each of screens 1412b and 1412c, and graphic data existing at the movement destination is shown on each of screens 1415a and 1416a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on each of a screen 1415b and a screen 1416b. At this time, the determination unit 164 determines that the operation acquired by the operation acquisition unit 163 is an operation of moving an end point included in the graphic data to the position of a graphic element included in the graphic data. In the example shown on the screen 1415b, an operation is performed of moving one line segment such that the position of an end point of the one line segment coincides with or comes close to the position of an end point of another line segment, Also, in the example shown on the screen 1416b, an operation is performed of moving one line segment such that the position of an end point of the one line segment coincides with or comes close to the position of the centre of a circle.

In such a case, the processing unit 165 causes the end point included in the graphic data to connect to the graphic element. In the example shown on the screen 1415b, the processing unit 165 causes the end point of the one line segment to connect to the end point of the other line segment. Also, in the example shown on the screen 1416b, the processing unit 165 causes the end point of the one line segment to connect to the centre of the circle. Graphic data after connection is controlled by the display control unit 162 so as to be displayed as shown on each of the screens 1415b and 1416b, for example. The two pieces of graphic data which have been connected may be treated as one (occurrence of restriction).

Furthermore, an operation performed by the user is performed as shown on each of a screen 1415c and a screen 1416c. At this time, the determination unit 164 determines that the operation acquired by the operation acquisition unit 163 is an operation of moving the centre of a circle included in the graphic data to the position of a graphic element included in the graphic data. In the example shown on the screen 1415c, an operation is performed of moving the circle such that the position of the centre of the circle coincides with or comes close to the position of an end point of a line segment. Also, in the example shown on the screen 1416c, an operation is performed of moving the circle such that the position of the centre of the circle coincides with or comes close to the position of the centre of another circle.

In such a case, the processing unit 165 causes the centre of the circle included in the graphic data to connect to the graphic element. In the example shown on the screen 1415c, the processing unit 165 causes the centre of the circle to connect to an end point of the line segment. Also, in the example shown on the screen 1416c, the processing unit 165 causes the centre of the circle to connect to the centre of the other circle. Graphic data after connection is controlled by the display control unit 162 so as to be displayed as shown on each of the screens 1415c and 1416c, for example. The two pieces of graphic data which have been connected may be treated as one (occurrence of restriction).

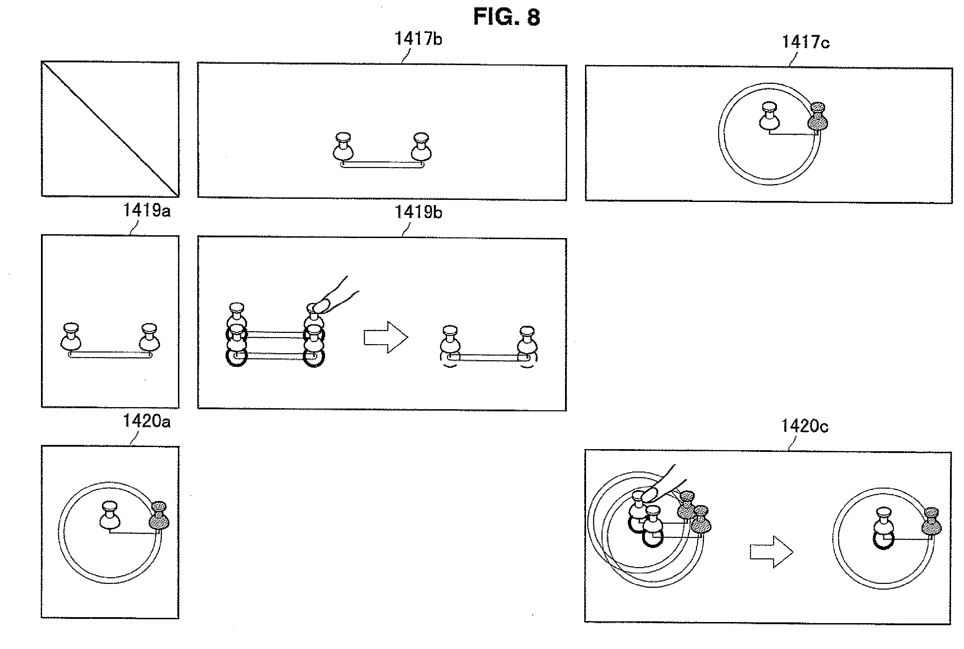

FIG. 8 shows an example of the function of the information processing apparatus 100 (a case of combining two graphic elements). As described above, the processing unit 165 can create graphic data based on an operation of a user. Also, the processing unit 165 can move the graphic data created, based on an operation of the user. Here, graphic data which is to be moved is shown on each of screens 1417b and 1417c, and graphic data existing at the movement destination is shown on each of screens 1419a and 1420a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on a screen 1419b. At this time, the determination unit 164 determines that the operation acquired by the operation acquisition unit 163 is an operation of moving an end point included in the graphic data to the position of a graphic element included in the graphic data. In the example shown on the screen 1419b, an operation is performed of moving one line segment such that the position of each end point of the one line segment coincides with or comes close to the position of each end point of another line segment.

In such a case, the processing unit 165 causes the line segment included in the graphic data to combine with the other line segment. In the example shown on the screen 1419b, the processing unit 165 causes the one line segment to combine with the other line segment. The graphic data after combining is controlled by the display control unit 162 so as to be displayed as shown on the screen 1419b, for example. The two pieces of graphic data which have been combined may be treated as one (occurrence of restriction).

Furthermore, an operation performed by the user is performed as shown on a screen 1420c, for example. At this time, the determination unit 164 determines that the operation acquired by the operation acquisition unit 163 is an operation of moving the centre of a circle included in the graphic data to the position of a graphic element included in the graphic data. In the example shown on the screen 1420e, an operation is performed of moving a circle such that the position of the centre of the circle coincides with or comes close to the position of the centre of another circle.

In such a case, the processing unit 165 causes the circle included in the graphic data to combine with the graphic element. In the example shown on the screen 1420c, the processing unit 165 causes one circle to combine with the other circle. The graphic data after combining is controlled by the display control unit 162 so as to be displayed as shown on the screen 1420c, for example. The two pieces of graphic data which have been combined may be treated as one (occurrence of restriction).

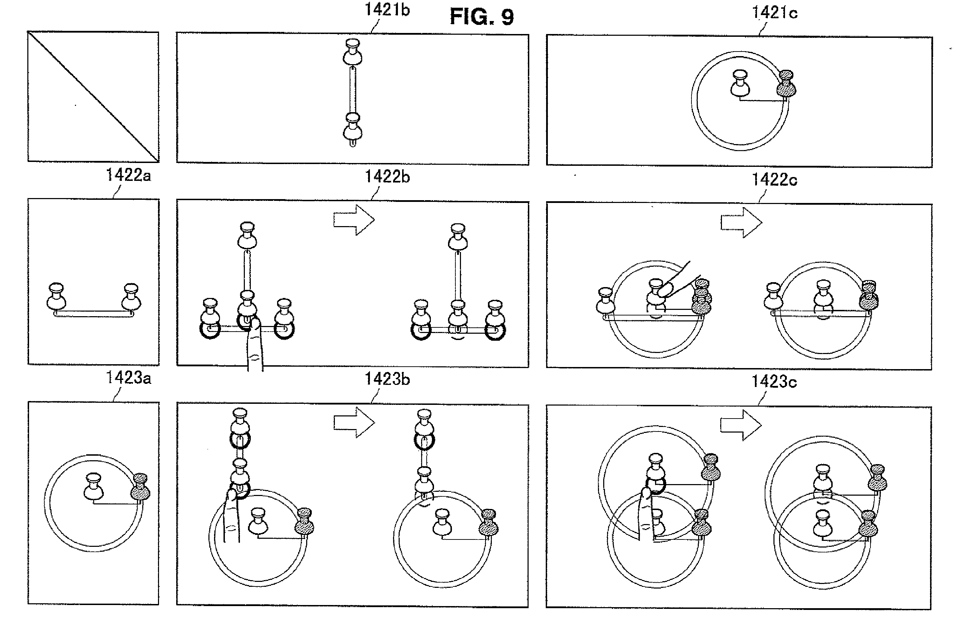

FIG. 9 shows an example of the function of the information processing apparatus 100 (a case of connecting two graphic elements). As described above, the processing unit 165 can create graphic data based on an operation of a user. Also, the processing unit 165 can move the graphic data created, based on an operation of the user. Here, graphic data to be moved is shown on each of screens 1421b and 1421c, and graphic data existing at the movement destination is shown on each of screens 1422a and 1423a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on each of a screen 1422b and a screen 1423b. At this time, the determination unit 164 determines that the operation acquired by the operation acquisition unit 163 is an operation of moving an end point included in the graphic data to the position of a graphic element included in the graphic data. In the example shown on the screen 1422b, an operation is performed of moving one line segment such that the position of an end point of the one line segment coincides with or comes close to a position on another line segment. Also, in the example shown on the screen 1423b, an operation is performed of moving one line segment such that the position of an end point of the one line segment coincides with or comes close to the position on the circumference of a circle.

In such a case, the processing unit 165 causes an end point included in the graphic data to connect to the graphic element. In the example shown on the screen 1422b, the processing unit 165 causes an end point of the one line segment to connect to a point on the other line segment. Also, in the example shown on the screen 1423b, the processing unit 165 causes an end point of the one line segment to connect to a point on the circumference of the circle. The graphic data after connection is controlled by the display control unit 162 so as to be displayed as shown on each of the screens 1422b and 1423b, for example. The two pieces of graphic data which have been connected may be treated as one (occurrence of restriction).

Furthermore, an operation performed by the user is performed as shown on each of a screen 1422c and a screen 1423c, for example. At this time, the determination unit 164 determines that the operation acquired by the operation acquisition unit 163 is an operation of moving the centre of a circle included in the graphic data to the position of a graphic element included in the graphic data. In the example shown on the screen 1422a, an operation is performed of moving the circle such that the position of the centre of the circle coincides with or comes close to the position of a point on a line segment. Also, in the example shown on the screen 1423c, an operation is performed of moving the circle such that the position of the centre of the circle coincides with or moves close to the position of a point on the circumference of another circle.

In such a case, the processing unit 165 causes the centre of the circle included in the graphic data to connect to the graphic element. In the example shown on the screen 1422c, the processing unit 165 causes the centre of the circle to connect to a point on the line segment. Also, in the example shown on the screen 1423c, the processing unit 165 causes the centre of the circle to connect to a position on the circumference of the other circle. The graphic data after connection is controlled by the display control unit 162 so as to be displayed as shown on each of the screens 1422c and 1423c, for example. The two pieces of graphic data which have been connected may be treated as one (occurrence of restriction).

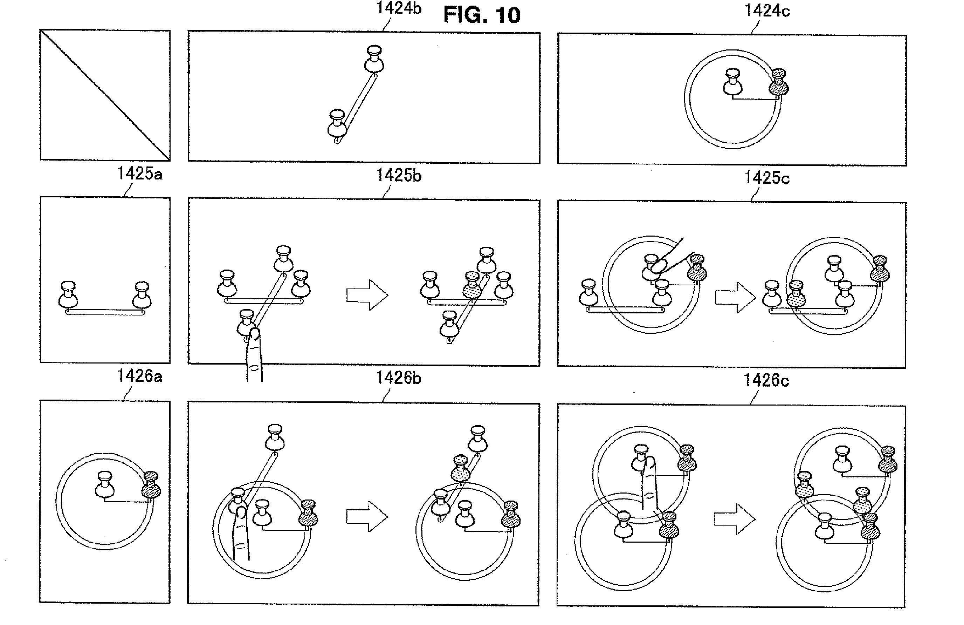

FIG. 10 shows an example of the function of the information processing apparatus 100 (a case where two graphic elements intersect). As described above, the processing unit 165 can create graphic data based on an operation of a user. Also, the processing unit 165 can move the graphic data created, based on an operation of the user. Here, graphic data to be moved is shown on each of screens 1424b and 1424c, and graphic data existing at the movement destination is shown on each of screens 1425a and 1426a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on each of a screen 1425b and a screen 1426b. At this time, the determination unit 164 determines that the operation acquired by the operation acquisition unit 163 is an operation of moving a graphic element to a position at which two graphic elements included in the graphic data intersect. In the example shown on the screen 1425b, an operation is performed of moving one line segment such that the one line segment intersects with another line segment. Also, in the example shown on the screen 1426b, an operation is performed of moving one line segment such that the one line segment intersects with a circle.

In such a case, the processing unit 165 creates a control point at the intersection point, In the example shown on the screen 1425b, the processing unit 165 creates a control point at the intersection point of the one line segment and the other line segment. Also, in the example shown on the screen 1426b, the processing unit 165 creates a control point at the intersection point of the line segment and the circle. Control is performed by the display control unit 162 such that a pin is displayed at the control point created, as shown in each of the screens 1425b and 1426b, for example. The two pieces of graphic data which have been intersected may be treated separately (no occurrence of restriction).

Furthermore, an operation performed by the user is performed as shown on each of a screen 1425c and a screen 1426c, for example. At this time, the determination unit 164 determines that the operation acquired by the operation acquisition unit 163 is an operation of moving a graphic element to a position where two graphic elements included in the graphic data intersect. In the example shown on the screen 1425c, an operation is performed of moving a circle such that the circle intersects a line segment. Also, in the example shown on the screen 1426c, an operation is performed of moving a circle such that the circle intersects another circle.

In such a case, the processing unit 165 creates a control point at the intersection point. In the example shown on the screen 1425c, the processing unit 165 creates a control point at the intersection point of the circle and the line segment. Also, in the example shown on the screen 1426c, the processing unit 165 creates a control point at each of two intersection points of one circle and the other circle. Control is performed by the display control unit 162 such that a pin is displayed at the control point created, as shown in each of the screens 1425c and 1426c, for example. The two pieces of graphic data which have been intersected may be treated separately (no occurrence of restriction).

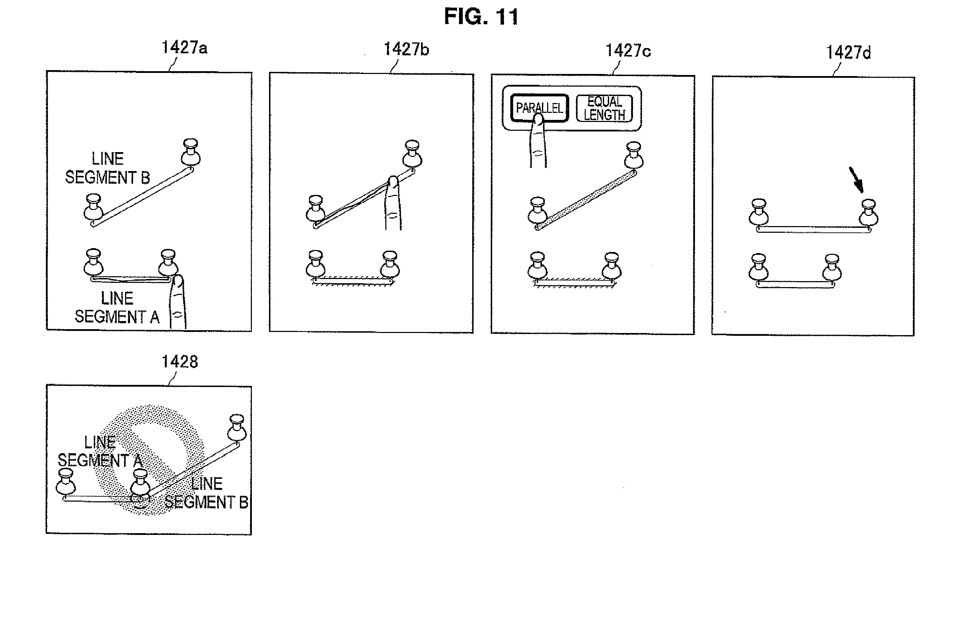

FIG. 11 shows an example of the function of the information processing apparatus 140 (a case of making two graphic elements parallel to each other). As described above, the processing unit 165 can create graphic data based on an operation of a user. Also, the processing unit 165 can select graphic data created, based on an operation of the user. Here, two line segments which have been created (a line segment A and a line segment B) are shown on a screen 1427a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on each of the screen 1427a and a screen 1427b. At this time, the determination unit 164 determines that the operation acquired by the operation acquisition unit 163 is an operation of sequentially selecting two graphic elements (for example, an operation of selecting one graphic element, and then selecting another graphic element within a predetermined period of time). In the example shown on the screen 1427a and the screen 1427b, an operation is performed in such a way that the line segment B is selected within a predetermined period of time after selection of the line segment A.

In such a case, the display control unit 162 causes a selection screen to be displayed on which a relationship the two graphic elements are to satisfy is selected (for example, a screen used for selecting "parallel" or "equal length"). At this time, as shown on a screen 1427c, the display control unit 162 may perform control in such a way that a graphic element which is to be changed and a graphic element which is not to be changed are displayed with different colours. The user performs, on the input device 150, an operation of selecting a relationship that two graphic elements are to satisfy. For example, the user can select "parallel" as the relationship that the two graphic elements are to satisfy.

In the case the determination unit 164 determined that it is the operation of selecting a relationship that two graphic elements are to satisfy, the processing unit 165 changes at least one of the two graphic elements such that the relationship is satisfied. For example, in the case it is determined that an operation of selecting "parallel" as the relationship that the two graphic elements are to satisfy is performed, the processing unit 165 changes at least one of the line segment A and the line segment B such that the relationship is satisfied. In the example shown on a screen 1427d, the processing unit 165 causes the line segment B which is selected after the line segment A to rotate, but it is also possible to have the line segment A rotate. Also, the line segment B is rotated around a point that is comparatively near the line segment A, but it may be rotated around any point.

Furthermore, in the case a relationship that is already satisfied is selected, the processing unit 165 does not have to perform an operation for satisfying the relationship. For example, it is assumed that two graphic elements are already "parallel" and the determination unit 164 determines that the operation acquired by the operation acquisition unit 163 is an operation of sequentially selecting the two graphic elements. In such a case, the display control unit 162 does not have to cause to be displayed the selection screen used for selecting a relationship that two graphic elements are to satisfy. Therefore, the processing unit 165 does not have to change the two graphic elements such that the relationship is satisfied.

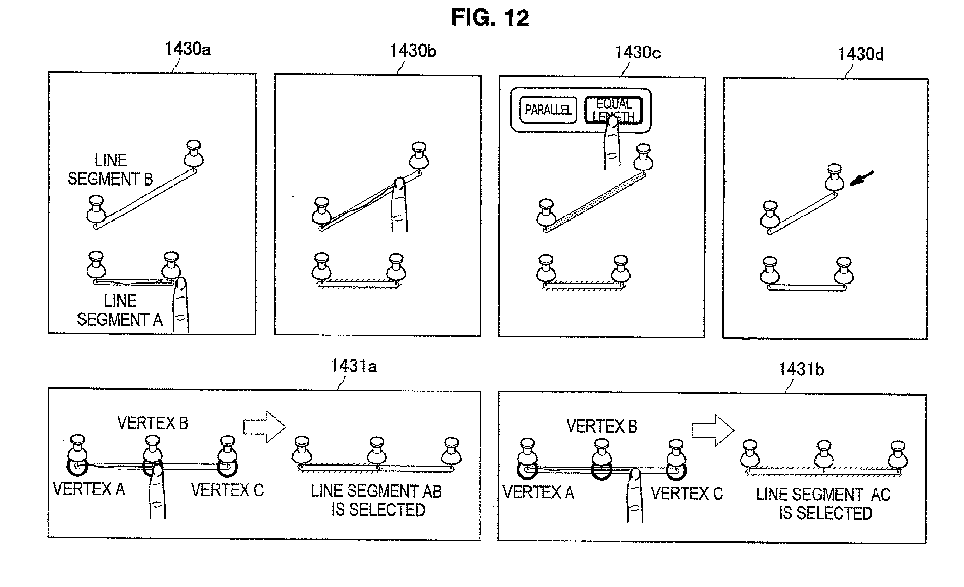

The upper half of FIG. 12 shows an example of the function of the information processing apparatus 100 (a case of making two graphic elements have equal lengths). As described above, the processing unit 165 can create graphic data based on an operation of a user. Also, the processing unit 165 can select graphic data created, based on an operation of the user. Here, two line segments which have been created (a line segment A and a line segment B) are shown on a screen 1430a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on each of the screen 1430a and a screen 1430b. At this time, the determination unit 164 determines that the operation acquired by the operation acquisition unit 163 is an operation of sequentially selecting two graphic elements (for example, an operation of selecting one graphic element, and then selecting another graphic element within a predetermined period of time). In the example shown on the screen 1430a and the screen 1430b, an operation is performed of selecting the line segment B within a predetermined period of time after selection of the line segment A.

In such a case, the display control unit 162 causes a selection screen to be displayed on which a relationship the two graphic elements are to satisfy is selected (for example, a screen used for selecting "parallel" or "equal length"). At this time, as shown on a screen 1430c, the display control unit 162 may perform control in such a way that a graphic element which is to be changed and a graphic element which is not to be changed are displayed with different colours. The user performs, on the input device 150, an operation of selecting a relationship that two graphic elements are to satisfy. For example, the user can select "equal length" as the relationship that the two graphic elements are to satisfy.

In the case the determination unit 164 determined that it is the operation of selecting a relationship that two graphic elements are to satisfy, the processing unit 165 changes at least one of the two graphic elements such that the relationship is satisfied. For example, in the case it is determined that an operation of selecting "equal length" as the relationship that two graphic elements are to satisfy is performed, the processing unit 165 changes at least one of the line segment A and the line segment B such that the relationship is satisfied. In the example shown on a screen 1430d, the processing unit 165 changes the length of the line segment B which is selected after the line segment A, but it is also possible to change the length of the line segment A. Also, the length of the line segment B is changed with a point that is comparatively near the line segment A as the centre, but it may be changed with any point as the centre.

Furthermore, in the case a relationship that is already satisfied is selected, the processing unit 165 does not have to perform an operation for satisfying the relationship.

The lower half of FIG. 12 shows an example of the function of the information processing apparatus 100 (a case of selecting either of two overlapping graphic elements). As described above, the processing unit 165 can create graphic data based on an operation of a user. Also, the processing unit 165 can select graphic data created, based on an operation of the user. Here, two line segments which have been created (a line segment AB and a line segment AC) are shown on a screen 1431a. The two line segments are overlapped.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on the screen 1431a. At this time, the determination unit 164 determines that the operation acquired by the operation acquisition unit 163 is an operation of sequentially selecting two vertices (for example, an operation of selecting one vertex, and then selecting another vertex within a predetermined period of time). In the example shown on the screen 1431a, an operation is performed of selecting a vertex B within a predetermined period of time after selection of a vertex A. In the example shown on a screen 1431b, an operation is performed of selecting a vertex C within a predetermined period of time after selection of a vertex A.

In such a case, the processing unit 165 selects a line segment joining one vertex and the other vertex. In the example shown on the screen 1431a, the processing unit 165 selects a line segment AB joining the vertex A and the vertex B. In the example shown on the screen 1431b, the processing unit 165 selects a line segment AC joining the vertex A and the vertex C.

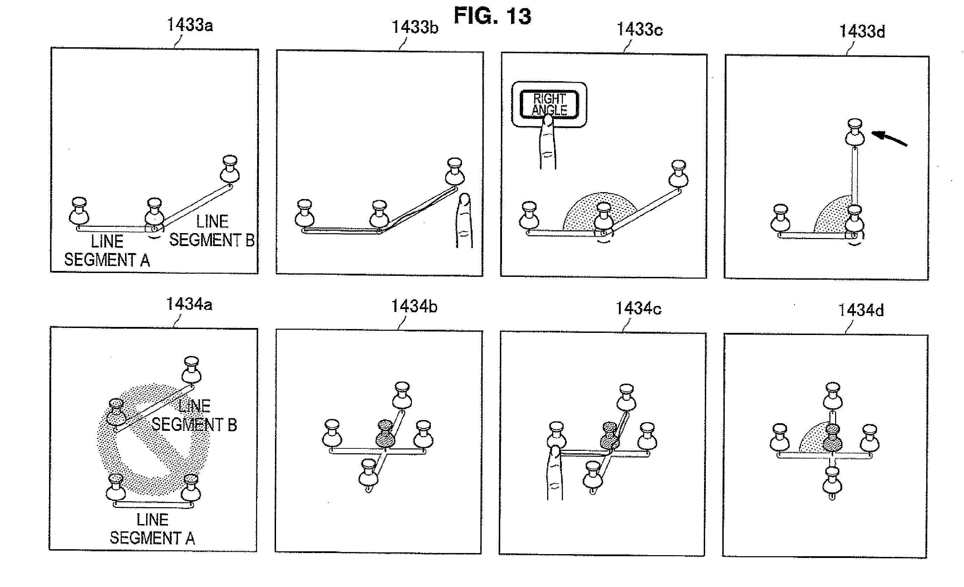

FIG. 13 shows an example of the function of the information processing apparatus 100 (a case of making a relationship between two line segments a right angle). As described above, the processing unit 165 can create graphic data based on an operation of a user. Also, the processing unit 165 can select graphic data created, based on an operation of the user. Here, two line segments which have been created (a line segment A and a line segment B) are shown on a screen 1433a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on each of the screen 1433a and a screen 1433b. At this time, the determination unit 164 determines that the operation acquired by the operation acquisition unit 163 is an operation of selecting an angle between two line segments (for example, an operation of tracing the line segment A and the line segment B in one stroke). In the example shown on the screen 1433a and the screen 1433b, an operation is performed of selecting the angle between the line segment A and the line segment B.

In such a case, the display control unit 162 causes a selection screen to be displayed on which a relationship two line segments are to satisfy is selected (for example, a screen used for selecting "right angle"). The user performs, on the input device 150, an operation of selecting a relationship that two line segments are to satisfy. For example, the user can select "right angle" as the relationship that two line segments are to satisfy.

In the case the determination unit 164 determined that it is the operation of selecting a relationship that two line segments are to satisfy, the processing unit 165 changes at least one of the two line segments such that the relationship is satisfied. For example, in the case it is determined that an operation of selecting "right angle" as the relationship that two line segments are to satisfy is performed, the processing unit 165 changes at least one of the line segment A and the line segment B such that the relationship is satisfied. In the example shown on a screen 1433d, the processing unit 165 changes the slope of the line segment B which is selected after the line segment A, but it is also possible to change the slope of the line segment A.

Furthermore, in the case two line segments do not intersect, the processing unit 165 does not have to perform an operation for satisfying the relationship. For example, it is assumed, as shown on a screen 1434a, that two line segments do not intersect and that the determination unit 164 determines that the operation acquired by the operation acquisition unit 163 is an operation of selecting an angle between the two line segments. In such a case, the display control unit 162 does not have to cause to be displayed the selection screen used for selecting a relationship that two line segments are to satisfy. Therefore, the processing unit 165 does not have to change the two line segments such that the relationship is satisfied.

Furthermore, an operation performed by the user is performed as shown on each of a screen 1434b and a screen 1434c, for example. At this time, the determination unit 164 determines that the operation acquired by the operation acquisition unit 163 is an operation of selecting an intersection point between two line segments (for example, an operation of tracing two line segments meeting at an intersection point in one stroke). In the example shown on the screen 1434b and the screen 1434c, an operation is performed of selecting the intersection point of the line segment A and the line segment B.

In such a case, the display control unit 162 causes a selection screen to be displayed on which a relationship two line segments are to satisfy is selected (for example, a screen used for selecting "right angle"). A user performs, on the input device 150, an operation of selecting a relationship that two line segments are to satisfy. For example, a user can select "right angle" as the relationship that two line segments are to satisfy.

In the case the determination unit 164 determined that it is the operation of selecting a relationship that two line segments are to satisfy, the processing unit 165 changes at least one of the two line segments such that the relationship is satisfied. For example, in the case it is determined that an operation of selecting "right angle" as the relationship that two line segments are to satisfy is performed, the processing unit 165 changes at least one of the line segment A and the line segment B such that the relationship is satisfied. In the example shown on a screen 1434d, the processing unit 165 changes the slope of the line segment B which is selected after the line segment A, but it is also possible to change the slope of the line segment A.

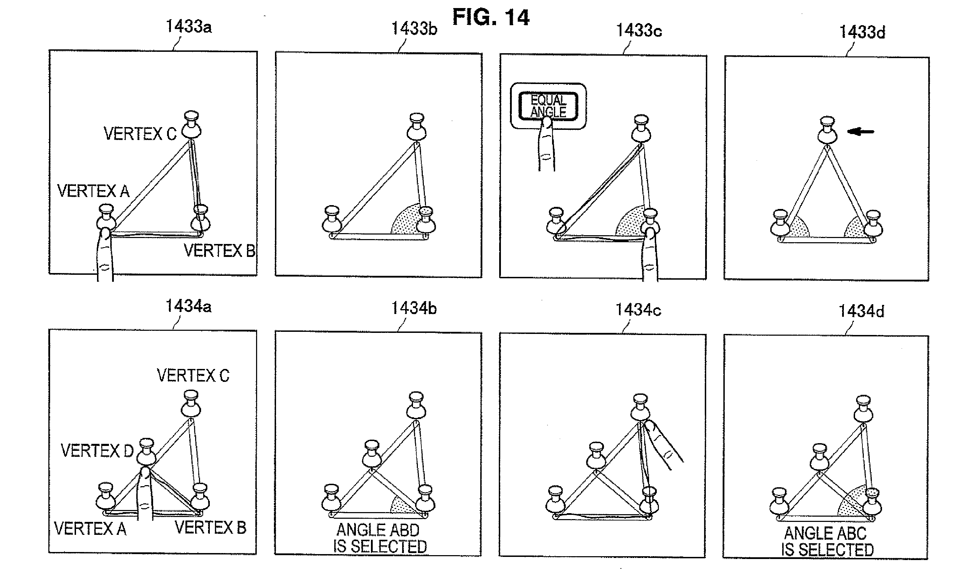

The upper half of FIG. 14 shows an example of the function of the information processing apparatus 100 (a case of making two graphic elements have equal angles). As described above, the processing unit 165 can create graphic data based on an operation of a user. Also, the processing unit 165 can select graphic data created, based on an operation of the user. Here, three vertices which have been created (a vertex A, a vertex B, and a vertex C) are shown on a screen 1433a.

The user performs an operation (for example, an operation of tracing) on the input device 150. Then, the operation acquisition unit 163 acquires the operation of the user, and the determination unit 164 determines the operation acquired by the operation acquisition unit 163, The processing unit 165 performs a process on the graphic data based on the determination by the determination unit 164.

For example, an operation performed by the user is performed as shown on each of the screen 1433a, a screen 1433b, and a screen 1433c. At this time, the determination unit 164 determines that the operation acquired by the operation acquisition unit 163 is an operation of sequentially selecting two graphic elements (for example, an operation of selecting one graphic element, and then selecting another graphic element within a predetermined period of time). In the example shown on the screen 1433a, the screen 1433b, and the screen 1433c, an operation is performed of selecting the vertex B within a predetermined period of time after selection of the vertex A.

In such a case, the display control unit 162 causes a selection screen to be displayed on which a relationship two graphic elements are to satisfy is selected (for example, a screen used for selecting "equal angles"). The user performs, on the input device 150, an operation of selecting a relationship that two graphic elements are to satisfy. For example, the user can select "equal angles" as the relationship that two graphic elements are to satisfy.

In the case the determination unit 164 determined that it is the operation of selecting a relationship that two graphic elements are to satisfy, the processing unit 165 changes graphic elements such that the relationship is satisfied. For example, in the case it is determined that an operation is performed of selecting "equal angles" as the relationship that two graphic elements are to satisfy, the processing unit 165 changes graphic elements such that the relationship is satisfied. In the example shown on a screen 1433d, the processing unit 165 moves the vertex C in parallel to the line segment AB so that an angle A and an angle B become equal.

The lower half of FIG. 14 shows an example of the function of the information processing apparatus 100 (a case of selecting either of two overlapping graphic elements). As described above, the processing unit 165 can create graphic data based on an operation of a user. Also, the processing unit 165 can select graphic data created, based on an operation of the user. Here, four vertices which have been created (a vertex A, a vertex B, a vertex C, and a vertex D) are shown on a screen 1434a. An angle ABD and an angle ABC are overlapped with each other.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on the screen 1434a, and a screen 1434c. At this time, the determination unit 164 determines that the operation acquired by the operation acquisition unit 163 is an operation of sequentially selecting three vertices. In such a case, the processing unit 165 selects an angle that is defined by the three vertices. In the example shown on the screen 1434b, the processing unit 165 selects an angle ABD defined by the vertex A, the vertex B, and the vertex D. In the example shown on the screen 1434d, the processing unit 165 selects an angle ABC defined by the vertex A, the vertex B, and the vertex C.

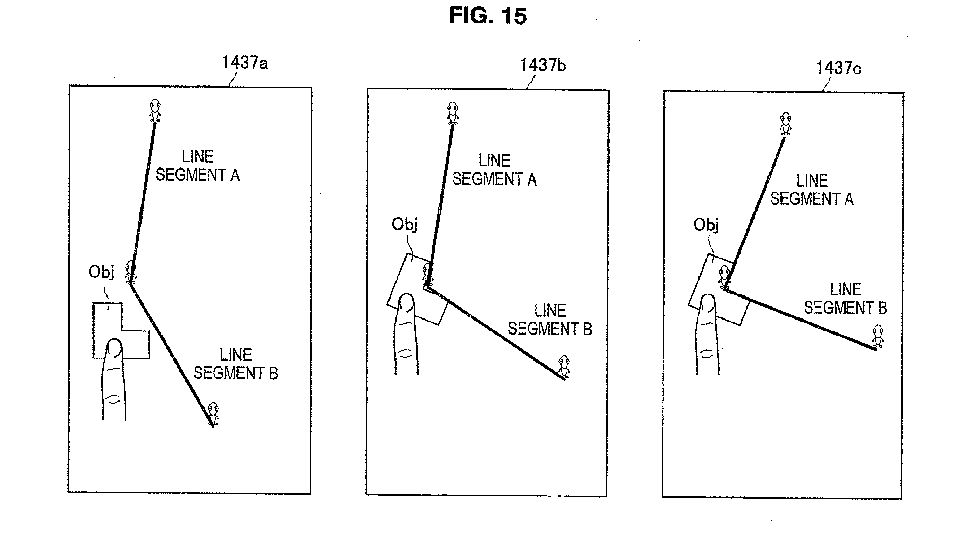

FIG. 15 shows an example of the function of the information processing apparatus 100 (a case of making an object contact a graphic element). As described above, the processing unit 165 can create graphic data based on an operation of a user, Also, the processing unit 165 can move an object Obj (for example, a ruler or the like) based on an operation of the user. Here, an object Obj to be moved and two graphic elements (for example, a line segment A and a line segment B) are shown on a screen 1437a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on a screen 1437b. At this time, the determination unit 164 determines that the operation acquired by the operation acquisition unit 163 is an operation of moving an object Obj with respect to a graphic element included in graphic data. In the example shown on the screen 1437b, an operation is performed of moving the object Obj such that it contacts an angle between the line segment A and the line segment B.

In such a case, the processing unit 165 changes a graphic element based on the shape of the object. In the example shown on a screen 1437c, the processing unit 165 changes the slopes of the line segment A and the line segment B based on the shape of the object Obj. The line segment A and the line segment B which have been changed are controlled by the display control unit 162 so as to be displayed as shown on the screen 1437c, for example. The line segment A and the line segment B which have been changed may be treated as one (occurrence of restriction). Furthermore, the restriction may be removed when the object Obj is separated from the angle between the line segment A and the line segment B.

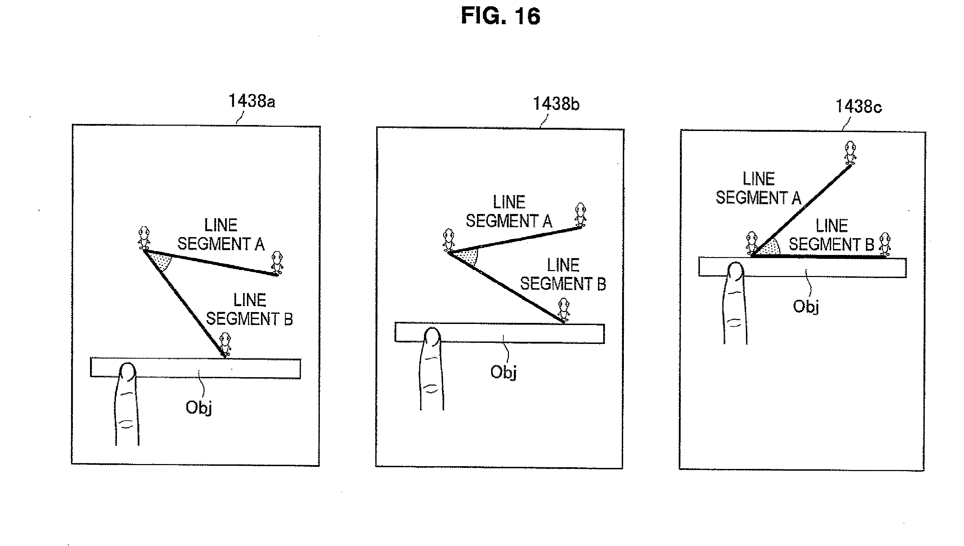

FIG. 16 shows an example of the function of the information processing apparatus 100 (a case of making an object contact a graphic element). As described above, the processing unit 165 can create graphic data based on an operation of a user. Also, the processing unit 165 can move an object (for example, a ruler or the like) based on an operation of the user. Here, an object Obj to be moved and two graphic elements (for example, a line segment A and a line segment B) are shown on a screen 1438a.

The user performs an operation (for example, an operation of tracing) on the input device 150. Then, the operation acquisition unit 163 acquires the operation of the user, and the determination unit 164 determines the operation acquired by the operation acquisition unit 163. The processing unit 165 performs a process on the graphic data based on the determination by the determination unit 164.

For example, an operation performed by the user is performed as shown on a screen 1438b. At this time, the determination unit 164 determines that the operation acquired by the operation acquisition unit 163 is an operation of moving an object Obj with respect to a graphic element included in graphic data. In the example shown on the screen 1438b, an operation is performed of moving the object Obj such that it contacts the line segment B.

In such a case, the processing unit 165 changes a graphic element based on the shape of the object. In the example shown on a screen 1438c, the processing unit 165 changes the slopes of the line segment A and the line segment B based on the shape of the object Obj. The line segment A and the line segment B which have been changed are controlled by the display control unit 162 so as to be displayed as shown on the screen 1438c, for example. The line segment A and the line segment B which have been changed may be treated as one (occurrence of restriction). Furthermore, the restriction may be removed when the object Obj is separated from the line segment B.

### [1-3: Flow of Operation of Information Processing Apparatus]

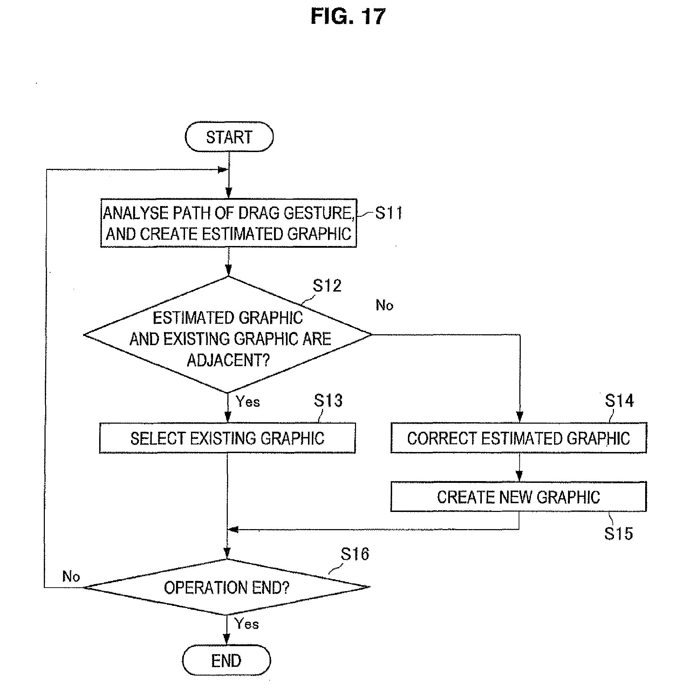

FIG. 17 is a flow chart showing an example of an operation of the information processing apparatus 100. First, the processing unit 165 analyses the path of a drag gesture and creates an estimated graphic (step S11). The estimated graphic corresponds to the line segment, the circle, or the like, in the examples described above. The determination unit 164 determines whether the estimated graphic and an existing graphic are adjacent or not (step S12). In the case the determination unit 164 determines that the estimated graphic and the existing graphic are not adjacent (step S12: "No"), the processing unit 165 corrects the estimated graphic (step S14), creates a new graphic (step S15), and proceeds to step S16.

In the case the determination unit 164 determines that the estimated graphic and the existing graphic are adjacent (step S12: "Yes"), the processing unit 165 selects the existing graphic (step S13), and proceeds to step S16. In the case of operation end (step S16: "Yes"), the operation is ended, but in the case of operation continuation (step S16: "No"), the operation is continued after returning to step S11.

### [1-4: Basic Operation of Information Processing Apparatus]

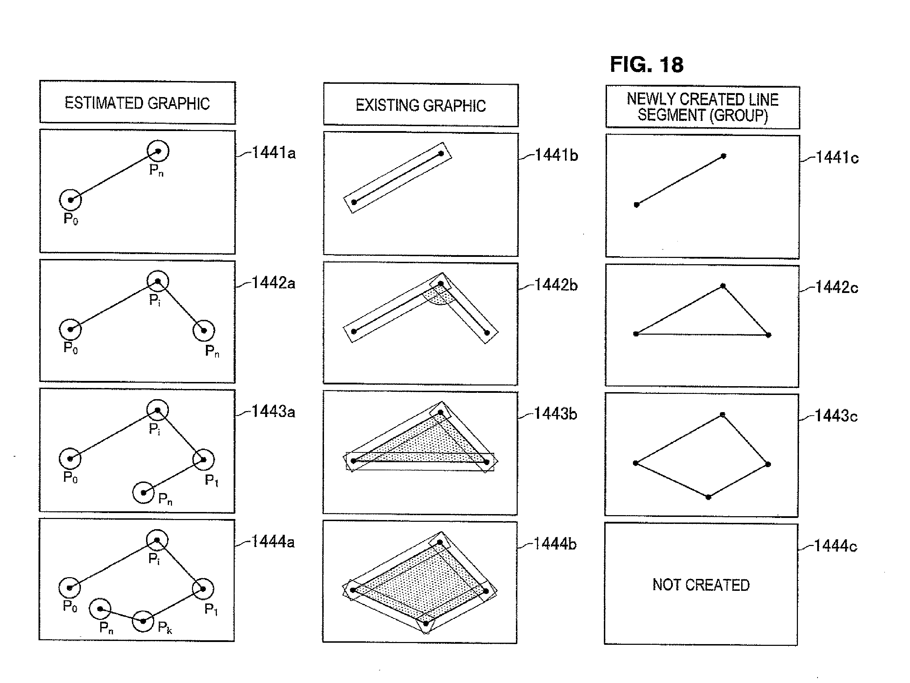

FIG 18 is a diagram for describing a basic operation of the information processing apparatus 100 (creation and selection of a line segment group). As shown in FIG. 18, an estimated graphic can be created based on vertices acquired by the operation acquisition unit 163. In the example shown on a screen 1441a, the processing unit 165 can create a line segment P₀Pₙ as the estimated graphic, based on vertices P₀ and Pₙ. Also, in the example shown on a screen 1442a, the processing unit 165 can create a line segment group P₀PᵢPₙ as the estimated graphic, based on vertices P₀, Pᵢ, and Pₙ. Furthermore, in the example shown on a screen 1443a, the processing unit 165 can create a line segment group P₀PᵢP₁Pₙ as the estimated graphic, based on vertices P₀, Pᵢ, Pᵢ, and Pₙ. Furthermore, in the example shown on a screen 1444a, the processing unit 165 can create a line segment group P₀PᵢP₁PₖPₙ as the estimated graphic, based on vertices P₀, Pᵢ, Pₗ Pₖ, and Pₙ.

In such a case, the determination unit 164 determines an overlap between the estimated graphic and an existing graphic, and the processing unit 165 selects a graphic element based on the overlapping portion. In the example shown on a screen 1441b, the processing unit 165 can select the line segment P₀Pₙ based on the overlapping vertices P₀ and Pₙ. Also, in the example shown on a screen 1442b, the processing unit 165 can select an angle P₀PᵢPₙ based on the overlapping vertices P₀, Pᵢ, and Pₙ. Furthermore, in the example shown on a screen 1443b, the processing unit 165 can select a region P₀PᵢP₁ based on the overlapping vertices P₀, Pᵢ, and Pₗ. Furthermore, in the example shown on a screen 1444b, the processing unit 165 can select a region PₒPᵢPₗPₖ based on the overlapping vertices P₀, Pᵢ, Pₗ, and Pₖ.

Furthermore, the processing unit 165 can also newly create a graphic element. In the example shown on a screen 1441c, the processing unit 165 can create a line segment P₀Pₙ based on the vertices P₀ and Pₙ. Also, in the example shown on a screen 1442c, the processing unit 165 can create a triangle P₀PᵢPₙ based on the vertices P₀, Pᵢ, and Pₙ. Furthermore, in the example shown on a screen 1443c, the processing unit 165 can create a quadrilateral P₀PᵢPₗPₙ based on the vertices P₀, Pᵢ, Pₗ, and Pₙ. Furthermore, in the example shown on a screen 1444c, although it is assumed that a graphic is not to be created, the processing unit 165 may create a pentagon P₀PᵢPₗPₖP, based on the vertices P₀, Pᵢ, Pₗ, Pₖ, and Pₙ.

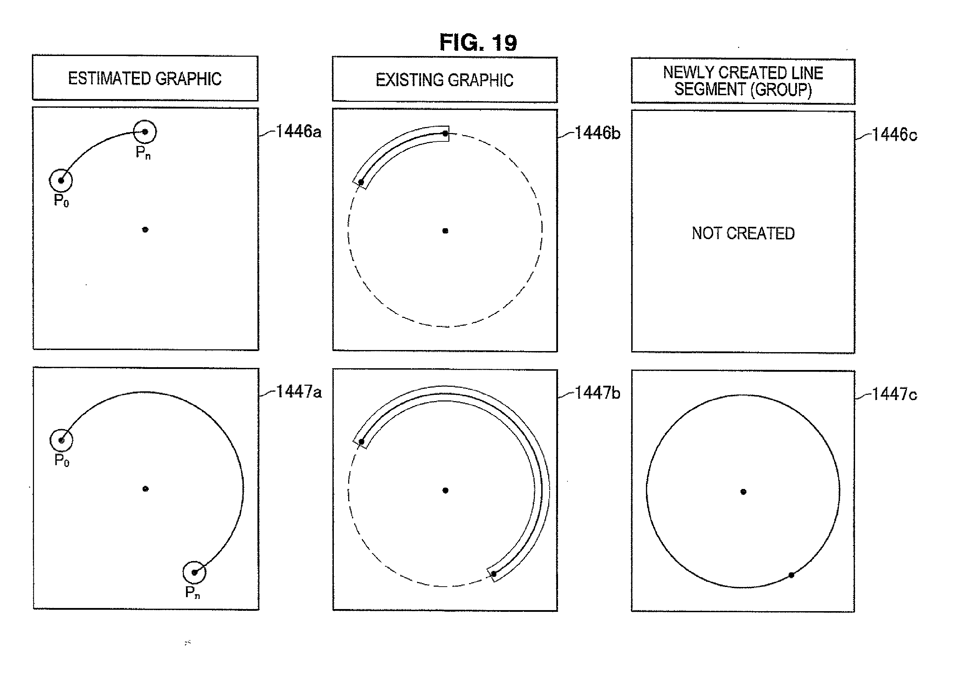

FIG. 19 is a diagram for describing a basic operation of the information processing apparatus 100 (creation and selection of a circle). As shown in FIG. 19, an estimated graphic can be created based on vertices acquired by the operation acquisition unit 163. In the example shown on a screen 1446a, the processing unit 165 can create an arc P₀Pₙ as the estimated graphic based on vertices P₀ and Pₙ. Also, in the example shown on a screen 1447a, the processing unit 165 can create an arc P₀Pₙ as the estimated graphic based on vertices P₀ and Pₙ.

In such a case, the determination unit 164 determines an overlap between the estimated graphic and an existing graphic, and the processing unit 165 selects a graphic element based on the overlapping portion. In the example shown on a screen 1446b, the processing unit 165 can select an arc P₀Pₙ based the overlapping vertices P₀ and Pₙ. Also, in the example shown on a screen 1447b, the processing unit 165 can select an arc P₀Pₙ based on the overlapping vertices P₀ and Pₙ.

Furthermore, the processing unit 165 can also newly create a graphic element. In the example shown on a screen 1446c, although it is assumed that a graphic is not to be created, the processing unit 165 may create an arc P₀Pₙ based on the vertices P₀ and Pₙ. Also, in the example shown on a screen 1447c, the processing unit 165 creates an arc P₀Pₙ based on the vertices P₀ and Pₙ.

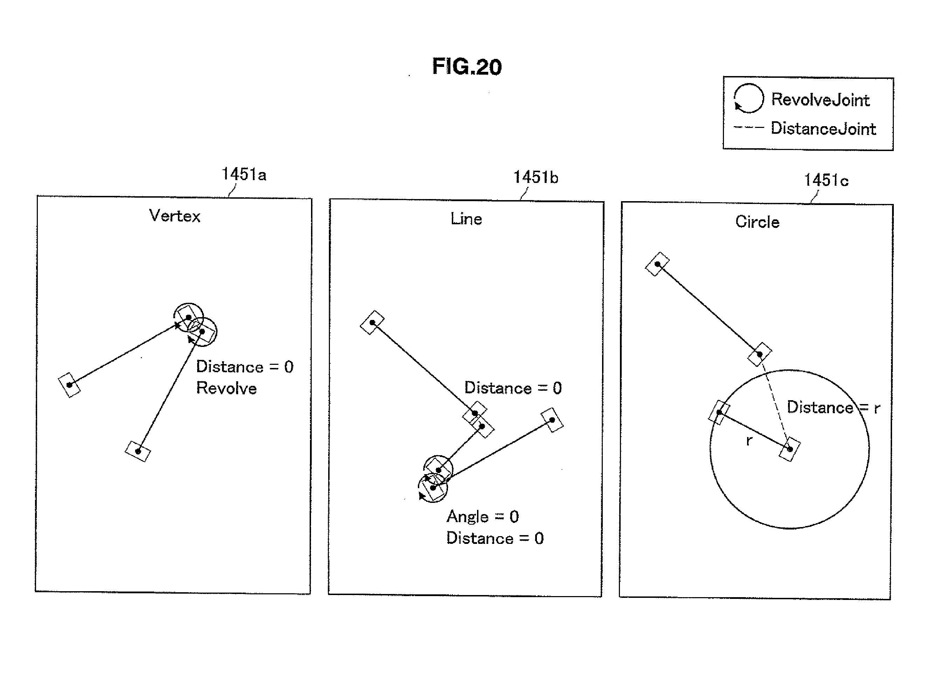

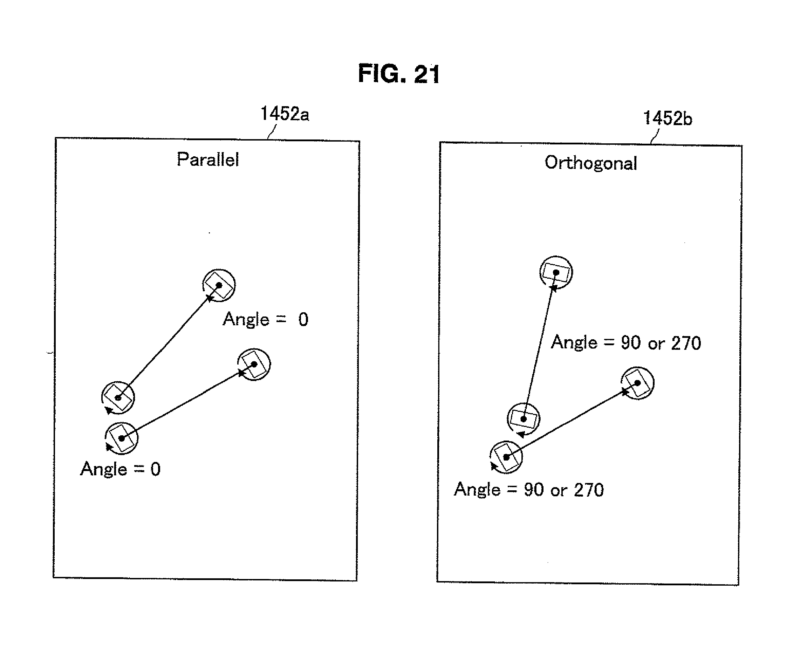

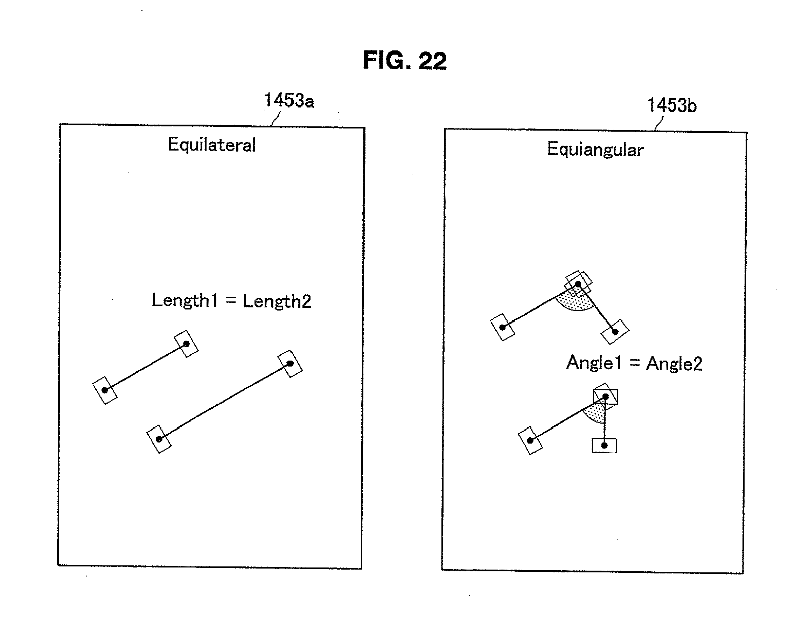

FIGS. 20 to 22 are diagrams for describing a basic operation of the information processing apparatus 100 (restriction on a graphic element). As shown in FIGS. 20 to 22, the processing unit 165 can place a restriction on a graphic element. As shown on a screen 1451a, the processing unit 165 may place a restriction "distance = 0" with respect to two vertices. Also, as shown on a screen 1451b, the processing unit 165 can place a restriction "distance = 0, angle = 0" with respect to two line segments. Furthermore, as shown on a screen 1451c, the processing unit 165 can place a restriction "distance = r" with respect to a line segment and a circle. The external force may become greater as "distance" nears "r".

Also, as shown on a screen 1452a, the processing unit 165 can keep two line segments parallel by placing a restriction "angle = 0" with respect to the two line segments, Furthermore, as shown on a screen 1452b, the processing unit 165 can keep two line segments orthogonal by placing a restriction "angle = 90 or 270" with respect to the two line segments.

Furthermore, as shown on a screen 1453a, the processing unit 165 can keep the length of two line segments equal to each other by placing a restriction "length 1 = length 2" with respect to the length of each of the two line segments. The external force may become greater as "length 1" nears "length 2". Also, as shown in a screen 1453b, the processing unit 165 can keep angles equal to each other by placing a restriction "angle 1 = angle 2" with respect to the two angles.

### <2. Summary>

According to the embodiment described in this section, by acquiring an operation of a user, a process can be performed on graphic data based on a determination result regarding the acquired operation. Accordingly, a process regarding graphic data can be performed according to an operation of a user by automatically identifying the operation.

The technology of the present disclosure is particularly effective when explaining something while using a drawing tool (when giving a lecture in real time or when giving a presentation, for example). For example, in a case a user explains something while drawing using a drawing tool, the user has to select an operation (for example, object movement or the like) from drawing tools and then select a graphic element to be processed, and the operation is burdensome. According to the technology of the present disclosure, since a process regarding graphic data can be performed according to an operation of a user by automatically identifying the operation, an operation can be performed with ease.

Additionally, the series of control processes by each device described in the present specification may be realized by using software, hardware, or a combination of software and hardware. Programs constituting the software are stored in advance in a computer-readable storage medium provided within or outside each device. Each program is read by a RAM (Random Access Memory) at the time of execution and is executed by a processor such as a CPU (Central Processing Unit), for example.

It should be understood by those skilled in the art that various modifications, combinations, subcombinations and alterations may occur depending on design requirements and other factors insofar as they are within the scope of the appended claims or the equivalents thereof. Further feature(s) of the dependent information process apparatus claims may also be combined with the feature(s) of the program claims and/or the information processing method claims.

Additionally, the following configurations are also within the scope of the present disclosure.

### (1)

An information processing apparatus including:
a graphic acquisition unit for acquiring graphic data;
an operation acquisition unit for acquiring an operation of a user;
a determination unit for determining the operation acquired by the operation acquisition unit; and
a processing unit for performing a process on the graphic data based on a determination by the determination unit.

### (2)

The information processing apparatus according to (1), wherein, in a case the operation acquired by the operation acquisition unit is determined by the determination unit to be an operation of selecting one or some of one or more end points included in the graphic data, the processing unit creates a new graphic.

### (3)

The information processing apparatus according to (1) or (2), wherein, in a case the operation acquired by the operation acquisition unit is determined by the determination unit to be an operation of selecting all of one or more end points included in the graphic data, the processing unit selects the graphic data.

### (4)

The information processing apparatus according to any one of (1) to (3), wherein, in a case the operation acquired by the operation acquisition unit is determined by the determination unit to be an operation of selecting two intersection points included in the graphic data, the processing unit creates, as new graphic data, a line segment joining the two intersection points.

### (5)

The information processing apparatus according to any one of (1) to (4), wherein, in a case the operation acquired by the operation acquisition unit is determined by the determination unit to be an operation of selecting one intersection point included in the graphic data and a point not included in the graphic data, the processing unit creates, as new graphic data, a line segment joining the one intersection point and the point not included in the graphic data.

### (6)

The information processing apparatus according to any one of (1) to (5), wherein, in a case the operation acquired by the operation acquisition unit is determined by the determination unit to be an operation of moving an end point included in the graphic data to a position of a graphic element included in the graphic data, the processing unit connects the end point to the graphic element.

### (7)

The information processing apparatus according to any one of (1) to (6), wherein, in a case the operation acquired by the operation acquisition unit is determined by the determination unit to be an operation of selecting two graphic elements included in the graphic data and an operation of selecting a relationship that the two graphic elements are to satisfy, the processing unit changes at least one of the two graphic elements such that the relationship is satisfied.

### (8)

The information processing apparatus according to any one of (1) to (7), wherein, in a case the operation acquired by the operation acquisition unit is determined by the determination unit to be an operation of causing an object to contact a graphic element included in the graphic data, the processing unit changes the graphic element based on a shape of the object.

### (9)

A program for causing a computer to function as an information processing apparatus including:
a graphic acquisition unit for acquiring graphic data;
an operation acquisition unit for acquiring an operation of a user;
a determination unit for determining the operation acquired by the operation acquisition unit; and
a processing unit for performing a process on the graphic data based on a determination by the determination unit.

### (10)

The program according to (9), wherein, in a case the operation acquired by the operation acquisition unit is determined by the determination unit to be an operation of selecting one or some of one or more end points included in the graphic data, the processing unit creates a new graphic.

### (11)

The program according to (9) or (10), wherein, in a case the operation acquired by the operation acquisition unit is determined by the determination unit to be an operation of selecting all of one or more end points included in the graphic data, the processing unit selects the graphic data.

### (12)

The program according to any one of (9) to (11), wherein, in a case the operation acquired by the operation acquisition unit is determined by the determination unit to be an operation of selecting two intersection points included in the graphic data, the processing unit creates, as new graphic data, a line segment connecting the two intersection points.

### (13)

The program according to any one of (9) to (12), wherein, in a case the operation acquired by the operation acquisition unit is determined by the determination unit to be an operation of selecting one intersection point included in the graphic data and an end point included in the graphic data, the processing unit creates, as new graphic data, a line segment connecting the one intersection point and the end point.

### (14)

The program according to any one of (9) to (13), wherein, in a case the operation acquired by the operation acquisition unit is determined by the determination unit to be an operation of moving an end point included in the graphic data to a position of a graphic element included in the graphic data, the processing unit connects the end point to the graphic element.

### (15)

The program according to any one of (9) to (14), wherein, in a case the operation acquired by the operation acquisition unit is determined by the determination unit to be an operation of selecting two graphic elements included in the graphic data and an operation of selecting a relationship that the two graphic elements are to satisfy, the processing unit changes at least one of the two graphic elements such that the relationship is satisfied..

### (16)

The program according to any one of (9) to (15), wherein, in a case the operation acquired by the operation acquisition unit is determined by the determination unit to be an operation of causing an object to contact a graphic element included in the graphic data, the processing unit changes the graphic element based on a shape of the object.

### (17)

An information processing method including:
acquiring graphic data;
acquiring an operation of a user;
determining the operation acquired; and
performing a process on the graphic data based on a determination.

The present application contains subject matter related to that disclosed in Japanese Priority Patent Application JP 2011-129855 filed in the Japan Patent Office on June 10, 2011, the entire content of which is hereby incorporated by reference.

## Claims

1. An information processing apparatus comprising:
a graphic acquisition unit for acquiring graphic data;
an operation acquisition unit for acquiring an operation of a user;
a determination unit for determining the operation acquired by the operation acquisition unit; and
a processing unit for performing a process on the graphic data based on a determination by the determination unit.

2. The information processing apparatus according to claim 1, wherein, in a case the operation acquired by the operation acquisition unit is determined by the determination unit to be an operation of selecting one or some of one or more end points included in the graphic data, the processing unit creates a new graphic.

3. The information processing apparatus according to claim 1, wherein, in a case the operation acquired by the operation acquisition unit is determined by the determination unit to be an operation of selecting all of one or more end points included in the graphic data, the processing unit selects the graphic data.

4. The information processing apparatus according to claim 1, wherein, in a case the operation acquired by the operation acquisition unit is determined by the determination unit to be an operation of selecting two intersection points included in the graphic data, the processing unit creates, as new graphic data, a line segment joining the two intersection points.

5. The information processing apparatus according to claim 1, wherein, in a case the operation acquired by the operation acquisition unit is determined by the determination unit to be an operation of selecting one intersection point included in the graphic data and a point not included in the graphic data, the processing unit creates, as new graphic data, a line segment joining the one intersection point and the point not included in the graphic data.

6. The information processing apparatus according to claim 1, wherein, in a case the operation acquired by the operation acquisition unit is determined by the determination unit to be an operation of moving an end point included in the graphic data to a position of a graphic element included in the graphic data, the processing unit connects the end point to the graphic element.

7. The information processing apparatus according to claim 1, wherein, in a case the operation acquired by the operation acquisition unit is determined by the determination unit to be an operation of selecting two graphic elements included in the graphic data and an operation of selecting a relationship that the two graphic elements are to satisfy, the processing unit changes at least one of the two graphic elements such that the relationship is satisfied.

8. The information processing apparatus according to claim 1, wherein, in a case the operation acquired by the operation acquisition unit is determined by the determination unit to be an operation of causing an object to contact a graphic element included in the graphic data, the processing unit changes the graphic element based on a shape of the object.

9. A program for causing a computer to function as an information processing apparatus including:
a graphic acquisition unit for acquiring graphic data;
an operation acquisition unit for acquiring an operation of a user;
a determination unit for determining the operation acquired by the operation acquisition unit;
and
a processing unit for performing a process on the graphic data based on a determination by the determination unit.

10. The program according to claim 9, wherein, in a case the operation acquired by the operation acquisition unit is determined by the determination unit to be an operation of selecting one or some of one or more end points included in the graphic data, the processing unit creates a new graphic.

11. The program according to claim 9, wherein, in a case the operation acquired by the operation acquisition unit is determined by the determination unit to be an operation of selecting all of one or more end points included in the graphic data, the processing unit selects the graphic data.

12. The program according to claim 9, wherein, in a case the operation acquired by the operation acquisition unit is determined by the determination unit to be an operation of selecting two intersection points included in the graphic data, the processing unit creates, as new graphic data, a line segment connecting the two intersection points.

13. The program according to claim 9, wherein, in a case the operation acquired by the operation acquisition unit is determined by the determination unit to be an operation of selecting one intersection point included in the graphic data and an end point included in the graphic data, the processing unit creates, as new graphic data, a line segment connecting the one intersection point and the end point.

14. The program according to claim 9, wherein, in a case the operation acquired by the operation acquisition unit is determined by the determination unit to be an operation of moving an end point included in the graphic data to a position of a graphic element included in the graphic data, the processing unit connects the end point to the graphic element.

15. An information processing method comprising:
acquiring graphic data;
acquiring an operation of a user;
determining the operation acquired; and
performing a process on the graphic data based on a determination.
